**Europäisches Patentamt**

**European Patent Office**

**Office européen des brevets**

(19)

(11) Veröffentlichungsnummer: **0 250 782**
**B1**

(12) # EUROPÄISCHE PATENTSCHRIFT

(45) Veröffentlichungstag der Patentschrift:
**16.08.90**

(51) Int. Cl.⁵: **B62D 21/02**

(21) Anmeldenummer: **87106579.3**

(22) Anmeldetag: **06.05.87**

(54) Vorrichtung zur Abstützung des Rahmens bzw. Aufbau eines Fahrzeuges.

(30) Priorität: **28.06.86 DE 3621821**
**28.03.87 DE 3710421**

(43) Veröffentlichungstag der Anmeldung:
**07.01.88 Patentblatt 88/1**

(45) Bekanntmachung des Hinweises auf die Patenterteilung:
**16.08.90 Patentblatt 90/33**

(84) Benannte Vertragsstaaten:
**AT CH DE GB IT LI**

(56) Entgegenhaltungen:
**US-A- 2 153 271**
**US-A- 3 901 494**

(73) Patentinhaber: **MAN Nutzfahrzeuge Aktiengesellschaft,**
**Dachauer Strasse 667 Postfach 50 06 20,**
**D-8000 München 50(DE)**

(72) Erfinder: **Hagin, Faust, Poccistrasse 2,**
**D-8000 München 2(DE)**
Erfinder: **Rühmann, Gerd, am Steinberg 1,**
**D-8031 Gilching(DE)**

**Beschreibung**

Die Erfindung bezieht sich auf eine Vorrichtung zur Abstützung des Rahmens bzw. Aufbaues eines Fahrzeuges, insbesondere Straßenkraftfahrzeuges, auf einem Fahrzeugrad gemäß dem Gattungsbegriff des Anspruches 1.

Es sind solche Vorrichtungen bekannt, bei denen seitlich neben den Rahmenlängsträgern halbbogenartige, freitragende Träger verlaufen, die sich auf den Rahmenlängsträgern abstützen. Bei diesen Vorrichtungen werden infolge von Biegemomenten sehr hohe Anforderungen an die Festigkeit der Längsträger gestellt. Bei einer anderen Konstruktion sind die die Axialfedern stützenden Träger Vollbogen, die relativ biegesteif und an jeweils zwei seitlichen Spanten befestigt sind. Nachteilig ist hier der hohe Fertigungsaufwand für die Vollbogenträger.

Es ist eine gattungsgemäße Vorrichtung aus der US 2 153 271 bekannt, bei der das dem Rahmen zugehörige Federlager an einem in Fahrzeuglängsrichtung verlaufenden Träger befestigt ist, der vor und hinter dem Federlager nach unten abgewinkelt ist, so daß ein sattelartiges, mit dem Federlager verbundenes Mittelstück in einer Horizontalebene liegt, der gegenüber vertikal nach unten versetzt jene Ebene liegt, in der der Träger mit seinen Enden am Rahmen befestigt ist.

Der Erfindung liegt die Aufgabe zugrunde, eine gattungsgemäße Vorrichtung so auszugestalten, daß sie baulich einfach darzustellen ist, daß keine aufwendigen Komponenten Anwendung finden müssen, und daß eine gute Lastverteilung und Krafteinleitung in den Rahmen bzw. Aufbau des Fahrzeuges erfolgt.

Die Aufgabe wird erfindungsgemäß dadurch gelöst, daß eine Vorrichtung gemäß dem Gattungsbegriff des Anspruchs 1 in der Weise ausgestaltet wird, wie es im Kennzeichnungsteil des Anspruchs 1 angegeben ist. Zweckmäßige Ausgestaltungen der Erfindung ergeben sich aus den Unteransprüchen.

Bei der Vorrichtung gemäß der Erfindung kann die Abstützung des Rahmens bzw. Fahrzeugaufbaues auf dem jeweiligen Fahrzeugrad relativ freizügig dem Rahmenbereich zugeordnet werden. Es finden einfache Bleche bzw. einfaches entsprechend dimensioniertes und verformtes Bandmaterial Verwendung, und es liegt eine Vorrichtung vor, bei der das dem Rahmen bzw. Fahrzeugaufbau zugeordnete Federende und der Rahmen selbst sehr genau einander zugeordnet werden können und mit Verschleißerscheinungen praktisch nicht gerechnet werden muß. Die Vorrichtung weist eine erhebliche Eigensteifigkeit auf, ohne daß dies mit einem unvertretbaren Gewichts- bzw. Masseaufwand erkauft werden müßte.

Die Erfindung ist nachfolgend an Hand der Zeichnung näher erläutert; in der Zeichnung zeigen:

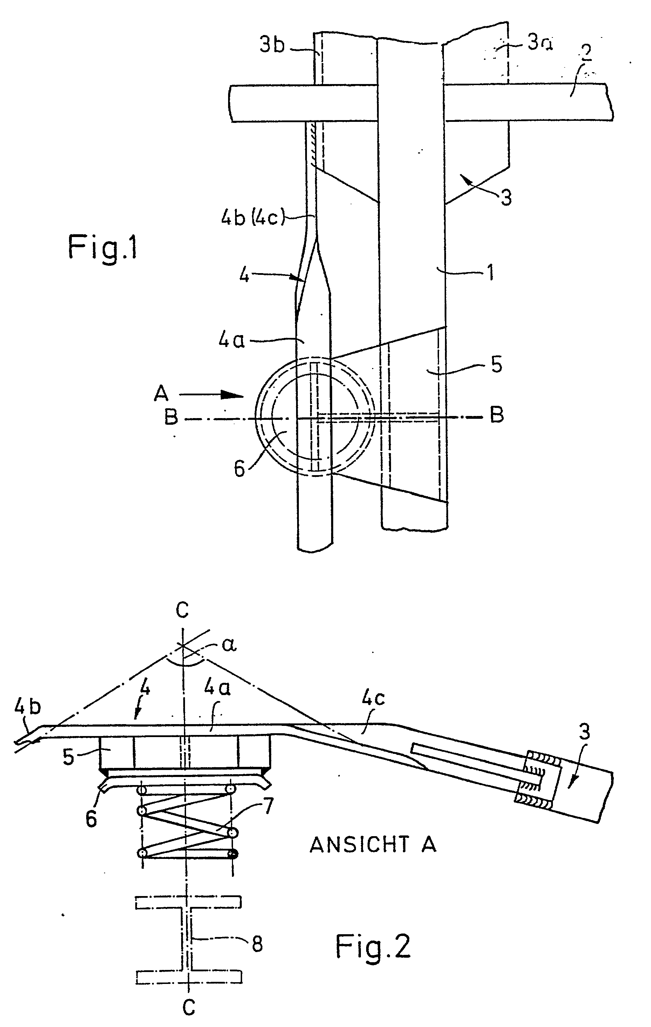

Fig. 1 die Anordnung in der Draufsicht, wobei die Vorrichtung symmetrisch zu der Linie B-B zu denken ist und

Fig. 2 eine Seitenansicht in Richtung des Pfeiles A in Fig. 1, wobei die Vorrichtung symmetrisch zu der Linie C-C zu denken ist.

Von dem Rahmen eines schweren Straßenkraftfahrzeuges, beispielsweise eines Lastkraftwagens, ist einer der beiden Längsträger und einer von mehreren Querträgern dargestellt. Die Querträger verbinden die beiden Längsträger untereinander. Die Langsträger liegen im Bereich der Rahmenlängsseiten. Der dargestellte Langsträger ist mit 1, der dargestellte Querträger ist mit 2 bezeichnet. Die beiden Träger sind miteinander starr verbunden, beispielsweise miteinander verschweißt oder vernietet. Um die Verbindung zwischen Längsträger 1 und Querträger 2 zu verstärken, ist ein Knotenblech 3 vorgesehen, das eine horizontale Platte 3a und einen vertikalen Flansch 3b hat. Mit der horizontalen Platte 3a ist das Knotenblech 3 mit dem Längsträger 1 und dem Querträger 2 verbunden, insbesondere verschweißt. Der vertikale Flansch 3b ist von der Platte 3a aus nach unten gerichtet.

Seitlich vom Längsträger 1, auf der Rahmenaußenseite, ist ein erfindungsgemäßer Träger 4 angeordnet, der in einfachster Weise über die gesamte Länge durchgehend im Querschnitt die Form eines flachen, liegenden Rechteckes hat. Entsprechend abgelängtes Bandmaterial hat ein horizontales, sattelförmiges Mittelstück 4a, an dessen beiden Enden der Träger 4 nach unten abgebogen ist. Das sattelförmige Mittelstück 4a liegt etwa in der Horizontalebene der Oberseite des Rahmenlängsträgers 1. Die nach unten abgebogenen Endteile 4b, 4c enden demzufolge in einer horizontalen Ebene, die vertikal unterhalb der Ebene liegt, in der das Mittelstück 4a und die Langsträgeroberseite liegen.

An der Unterseite des sattelförmigen Mittelstückes 4a ist das obere Federlager 6 einer vertikal angeordneten Wickelfeder 7 befestigt, die auch eine entsprechend wirkende andere Feder, insbesondere eine Gasfeder oder eine Gummifeder sein kann. Im Fall der Wickelfeder ist das Federlager 6 ein Federteller, im Fall einer anderen Feder muß das Federlager 6 zweckentsprechend anders ausgebildet sein. Die beiden Enden des Trägers 4 sind im Bereich je eines Rahmenquerträgers 2 am Rahmen mit den Längsträgern 1 und den Querträgern 2 befestigt. Das untere Ende der Wickelfeder 7 ist von einem Radträger, vorzugsweise einem an beiden Enden zumindest ein Rad aufweisenden Achsenkörper 8 abgestützt.

Die Abstützkräfte des Rahmens bzw. Aufbaues werden an den äußeren Enden des Trägers 4 als Zugkräfte in dessen nach unten gerichteten zugfeste Endteile 4b, 4c eingeleitet und im mittleren, sattelförmigen Teil 4a als vertikale, resultierende Kraft mittels der Feder 7 in den Achskörper 8 eingeleitet. Infolge der ausschließlichen Beanspruchung durch Zugkräfte in den Endteilen 4b, 4c genügt ein Rechteckquerschnitt des Trägers mit relativ geringer Abmessung. Andererseits ist dann der Träger in anderen Richtungen so weich, wie es mit Rücksicht auf eine exakte Zuordnung des oberen Federlagers 6 zum Rahmen unerwünscht sein kann.

Um diese Möglichkeit mit geringem Gewichtsaufwand zu vermeiden, ist der Träger 4 in weiterer Ausgestaltung im Bereich der Endteile 4b, 4c um seine Längsachse verdreht, so daß der Querschnitt des Bandmaterials im Bereich des Mittelteiles 4a ein liegendes, im Bereich der äußeren Enden der Endteile 4b, 4c ein stehendes Rechteck ist und der Träger im Bereich der Endteile in Fahrzeugquerrichtung biegeweich ist.

Im Hinblick auf geringe Biegebelastung in vertikaler Richtung ist es in jedem Fall notwendig, den Abstand zwischen der Wirkungslinie der Feder 7 und der Abwinklung des Mittelstückes 4a zu den Endteilen 4b und 4c klein zu halten.

Unabhängig von der Verdrehung der beiden Endteile 4b, 4c ist der Träger ein in Langsrichtung gerades Bauteil, im Fall der Knotenbleche 3 und deren Ausbildung mit horizontaler Platte 3a und vertikalem Flansch 3b ist der Anschluß der Trägerenden besonders einfach zu bewerkstelligen, indem die vertikal stehenden Enden des Bandmaterials an den vertikalen Flansch 3b des jeweiligen Knotenbleches 3 angeschweißt sind.

Um ein Kippen des Federlagers um die Trägerlängsachse nicht möglich zu machen, ist dieses Federlager 6 durch einen weiteren Flansch 5 direkt am Rahmenlängsträger 1 abgestützt. Der mittels vertikaler Stege biegesteif gemachte Flansch 5 ist mit seinem äußeren Ende zwischen Federlager 6 und Träger 4 angeordnet und mit beiden verbunden, während sein inneres Ende auf der Oberseite der Rahmenlängsträger befestigt ist.

Der Winkel α, den die beiden Endteile 4b, 4c mit ihren gedachten Verlängerungen einschließen, ergibt sich aus den praktischen Bedürfnissen und wird vom Konstrukteur im gegebenen Fall mit seinem routinemäßigen Können bestimmt. Die optimale Lösung ist eine Auslegung der Vorrichtung in der Weise, daß die beiden Trägerteile zu beiden Seiten des sattelförmigen Mittelstückes ausschließlich auf Zug beansprucht sind und deshalb so dimensioniert sind, daß sie die zu erwartenden Zugkräfte aufnehmen können.

**Patentansprüche**

1. Vorrichtung zur Abstützung des Rahmens bzw. Aufbaues (1, 2) eines Fahrzeuges, insbesondere Straßenkraftfahrzeuges, auf einem Fahrzeugrad, gegebenenfalls dem das Fahrzeugrad tragenden Achskörper, über eine Feder (7), wobei das dem Rahmen bzw. Aufbau (1, 2) zugehörige Federlager (6) an einen in Fahrzeuglängsrichtung verlaufenden Träger (4) befestigt ist, der mit seinen Enden (4b, 4c) am Rahmen bzw. Aufbau (1, 2) befestigt ist, dadurch gekennzeichnet, daß der Träger (4) im Querschnitt die Form eines flachen Rechteckes hat, das im Bereich des sattelartigen Mittelstückes (4a) horizontal liegt, und daß der Träger (4) vor und hinter dem sattelartigen Mittelstück (4a) so um seine Längsachse verdreht ist, daß das flache Rechteck im Bereich der Befestigung der Trägerenden am Rahmen bzw. Aufbau (1, 2) senkrecht steht.

2. Vorrichtung nach Anspruch 1, dadurch gekennzeichnet, daß die Teile des Trägers (4) zwischen den am Rahmen bzw. Aufbau (1, 2) befestigten Enden und dem sattelartigen Mittelstück in Fahrzeugquerrichtung biegeweich und auf Zug beanspruchbar ausgebildet sind.

3. Vorrichtung nach Anspruch 1 oder 2, dadurch gekennzeichnet, daß der Träger (4) unmittelbar vor und hinter dem Federteller abgewinkelt ist.

4. Vorrichtung nach den Ansprüchen 1–3, dadurch gekennzeichnet, daß der Träger (4) neben einem Rahmenlängsträger (1) liegt und die Befestigung der Trägerenden am Rahmenlängsträger (1) über horizontale Knotenbleche (3) erfolgt.

5. Vorrichtung nach Anspruch 4, dadurch gekennzeichnet, daß die Befestigung der Trägerenden am Rahmenlängsträger (1) im Bereich von Rahmenquerträgern (2) erfolgt und daß die Knotenbleche (3) sowohl mit den Trägerenden als auch mit dem Rahmenlängsträger (1) als auch mit je einem der Rahmenquerträger (2) verbunden sind und daß das Federlager (6) in der Mitte zwischen den Rahmenquerträgern (2) seitlich vom Rahmenlängsträger (1) angeordnet ist.

6. Vorrichtung nach Anspruch 4 oder Anspruch 5, dadurch gekennzeichnet, daß das Federlager (6) über ein horizontales Knotenblech (5) direkt am Rahmenlängsträger (1) abgestützt ist.

7. Vorrichtung nach Anspruch 6, dadurch gekennzeichnet, daß das Knotenblech (5) durch vertikale Stege versteift ist.

8. Vorrichtung nach Anspruch 5, dadurch gekennzeichnet, daß die Befestigung der Trägerenden an einem vertikalen Steg des jeweiligen Knotenbleches (3) erfolgt.

9. Vorrichtung nach einem der Ansprüche 1–8, dadurch gekennzeichnet, daß die Feder (7) eine mit ihrer Längsachse vertikal angeordnete Wickelfeder ist.

**Claims**

1. A device for supporting the chassis or body (1, 2) of a vehicle, particular a road vehicle, on a vehicle wheel, or where appropriate on the axle beam supporting the vehicle, by way of a spring (7), the spring bearing (6) associated with the chassis or body (1, 2) being secured to a support (4) extending in the longitudinal direction of the vehicle and secured at its ends (4b, 4c) to the chassis or body (1, 2), characterized in that in cross-section the support (4) is in the shape of a flat rectangle which lies horizontally in the region of the saddle-like middle portion (4a), and the support (4) is turned around its longitudinal axis in front of and behind the saddle-like middle portion (4a) in such a way that the flat rectangle stands vertically in the region of the support ends on the chassis or body (1, 2).

2. A device according to Claim 1, characterized in that the parts of the support (4) between the ends secured to the chassis or body (1, 2) and the saddle-like portion are made flexibly yielding in the transverse direction of the vehicle and able to withstand tensile stress.

3. A device according to Claim 1 or 2, characterized in that the support (4) is bent immediately in front of and behind the spring washer.

4. A device according to Claims 1 to 3, characterized in that the support (4) lies adjacent to a longitudinal support (4) lies adjacent to a longitudinal support (1) of the chassis, and the support ends are secured to the longitudinal support (1) of the chassis by way of horizontal junction plates (3).

5. A device according to Claim 4, characterized in that the support ends are secured to the longitudinal support (1) of the chassis in the region of transverse supports (2) of the chassis, and the junction plates (3) are connected both to the support ends and to the longitudinal support (1) of the chassis and to each of the transverse supports (2) of the chassis, and the spring bearing (6) is arranged in the middle between the transverse supports (2) of the chassis and laterally of the longitudinal support (1) of the chassis.

6. A device according to Claim 4 or Claim 5, characterized in that the spring bearing (6) is supported directly on the longitudinal support (1) of the chassis by way of a horizontal junction plate (5).

7. A device according to Claim 6, characterized in that the junction plate (5) is reinforced with vertical webs.

8. A device according to Claim 5, characterized in that the support ends are secured to a vertical web of the respective junction plate (3).

9. A device according to any one of Claims 1 to 8, characterized in that the spring (7) is a helical spring arranged vertically along its longitudinal axis.

**Revendications**

1. Dispositif destiné à l'étaiement du cadre et/ou de la carrosserie (1, 2) d'un véhicule, particulièrement d'un véhicule routier à moteur, sur une roue du véhicule, le cas échéant sur l'essieu portant une roue du véhicule, par l'intermédiaire d'un ressort (7), le palier de ressort (6) correspondant au cadre ou à la carrosserie (1, 2) est fixé sur une poutre (4) disposée selon l'axe longitudinal du véhicule qui est elle-même fixée à ses extrémités (4b, 4c) au cadre et/ou à la carrosserie (1, 2), et caractérisée par le fait que la section de ladite poutre a la forme d'un rectangle plat reposant horizontalement dans la section médiane ayant la forme d'une selle (4a), et que la poutre (4) est vrillée sur son propre axe longitudinal devant et derrière la section médiane en forme de selle de telle façon que le rectangle plat est en position verticale dans la section de la fixation des extrémités de la poutre sur le cadre et/ou sur la carrosserie (1, 2).

2. Dispositif selon la revendication 1, caractérisé par le fait que les éléments de la poutre (4) entre les extrémités fixées au cadre et/ou à la carrosserie (1, 2) et la section médiane en forme de selle sont réalisées en version à torsion souple et apte à être soumise à la traction dans le sens de l'axe longitudinal du véhicule.

3. Dispositif selon la revendication 1 ou 2, caractérisé par le fait que la poutre (4) est coudée juste devant et derrière la cuvette de ressort.

4. Dispositif selon la revendication 1 ou 2, caractérisé par le fait que la poutre (4) est disposée à proximité d'un longeron du cadre (1) et que la fixation des extrémités de la poutre est réalisée à l'aide de goussets horizontaux (3) sur le longeron du cadre (1).

5. Dispostif selon la revendication 4, caractérisé par le fait que la fixation des extrémités de la poutre est réalisée sur le longeron de cadre (1) dans la section des traverses du cadre (2) et que les goussets (3) sont autant reliés avec les extrémités de la poutre qu'avec le longeron du cadre (1) et également avec chacune des traverses (2) et que le palier de ressorts (6) est disposé au milieu entre les traverses (2) latéralement par rapport au longeron de cadre (1).

6. Dispositif selon la revendication 4 ou la revendication 5, caractérisé par le fait que le palier de ressorts (6) est directement soutenu sur le longeron de cadre (1) par l'intermédiaire d'un gousset horizontal (5).

7. Dispositif selon la revendication 6, caractérisé par le fait que le gousset (5) est renforcé par des raidisseurs verticaux.

8. Dispositif selon la revendication 5, caractérisé par le fait que la fixation des extrémités de la poutre est réalisée par un raidisseur vertical du gousset correspondant (3).

9. Dispositif selon l'une des revendications 1 à 8, caractérisé par le fait que le ressort (7) est un ressort hélicoïdal avec axe longitudinal à la verticale.

Fig.1

3b

3a

2

4b (4c)

4

3

1

4a

5

A

B ————————————— B

6

C

α

4b

4

4a

4c

3

5

6

7

ANSICHT A

8

Fig.2

C